# EUROPEAN PATENT SPECIFICATION

(11) **EP 1 500 858 B1**
(45) Date of publication and mention of the grant of the patent: **24.12.2008**
(21) Application number: 04102650.1
(22) Date of filing: 10.06.2004
(51) Int. Cl.: F16L 3/133

(54) **Clamp for hanging pipes**
Rohrabhängung
Suspension pour tuyaux

(30) Priority: 23.07.2003 ES 200301728
(43) Date of publication of application: 26.01.2005
(73) Proprietor: Apolo Fijaciones y Herramientas, S.L., 08211 Castellar del Valles (ES)
(72) Inventor: Ceravalls i Pujol, Ramon Apolo Fijac.y Herramient., 08211 Castellar del Valles (ES)
(74) Representative: Ponti Sales, Adelaida

(56) References cited:
- EP-A- 0 603 124
- GB-A- 2 320 077
- US-A- 1 154 319
- PATENT ABSTRACTS OF JAPAN vol. 2000, no. 01, 31 January 2000 (2000-01-31) & JP 11 294634 A (INABA DENKI SANGYO CO LTD), 29 October 1999 (1999-10-29)

## Description

The present invention relates to a clamp for hanging pipes which simplifies the task of fixing these elements, without needing to use any kind of tool.

### BACKGROUND OF THE INVENTION

Clamps which are typically used for hanging pipes for conductions are known. Said clamps are usually fixed by means of nuts to a threaded rod fastened to the ceiling, and consist of a flexible band or strip which adapts to the perimeter of the pipe, surrounding it by its lower part as a closed hook. The band or strip has its two ends folded and provided each of them with an orifice, in which the support rod will be housed.

For fixing the pipe, it is necessary to introduce the rod into the orifices of the ends, which are situated between a pair of nuts screwed to the rod, so that they are screwed each against the other, tightening the ends of the clamp and thus being closed the clamp.

Thus, it is necessary to close the clamp before introducing the pipe. This makes difficult to assemble the installations, as the pipe has to be slid longitudinally inside the clamp.

To avoid this disadvantage, another type of clamps, which allow its closing after placing the pipe, have been designed, like the one described in EP 0603124. Said clamp does also comprise a strip that first of all is fixed to a rod in one of its ends, said end being situated between two fixing nuts. The end being fixed to the rod is provided with a hook that allows it to be attached to an orifice arranged in the other end of the clamp. This end is also provided with an extension that has a central longitudinal recess. Closing of the clamp is carried out attaching the hook in an end and the orifice in the other one, and situating the extension of the latter between the two fixing nuts, so that the rod is placed inside the recess. Subsequently both nuts are tightened and the clamp is closed.

Thanks to these characteristics, the pipe is placed in the clamp and then the clamp is closed, outstandingly facilitating its installation. However, to close definitively the clamp, it is necessary to tighten its two ends, causing this maneuver waste of time and being necessary to use a proper tool.

JP 11294634 A describes a long sized body support R, in which a support body having a lockably locking portion is provided for a long body supporting bar-shaped element, and a support portion which can receive and support a supported object, a long element is provided for the support body, a receiving portion which can receive an inserted end of the bar-shaped element is provided for a portion constituting the locking portion to allow the bar-shaped element to intrude into the receiving portion, and a locking claw portion which can prevent the bar-shaped element which has intruded into the receiving portion from escaping from the receiving portion is provided for the receiving portion.

### DESCRIPTION OF THE INVENTION

The aim of the clamp of the present invention is to solve the disadvantages that have the devices known in the art.

The clamp for hanging pipes of the present invention is of the type comprising a strip that surrounds the pipe, means of attachment of the strip to a support means for fitting the two ends of the strip, the strip being attached to the means of attachment to a support by only one end and said means for fitting the two ends of the strip comprising, at one of the ends of the strip, an opening which includes a narrower zone, and at the other end of the strip, a tongue, the base of which has a narrowing, the fitting of both ends being carried out introducing the tongue in the opening so that the narrowing is fitted in the narrower zone,
the strip comprising a transversal articulation, and is characterized in that said
strip comprises longitudinal reinforcing ribs arranged between the articulation and both ends.

The ribs help the clamp to bear the pipe while it has not already been closed, what makes the operation of installation easier.

Advantageously, the strip includes a pair of orifices for the opening of the clamp by way of introducing a screwdriver or the like and levering it.

Thus, the clamp can be opened without any effort, lifting the weight of the pipe.

### BRIEF DESCRIPTION OF THE DRAWINGS

In order to assist the description of all that has been outlined above some drawings are attached which show schematically and solely by way of non-restrictive example a practical case of embodiment of the clamp of the invention, in which:
figure 2 is a detail view of both ends of the clamp open;
figure 3 is a side view of the clamp;
figure 4 is a side view of the clamp closed and bearing a pipe;
figure 5 shows how the opening of the clamp is carried out.

### DESCRIPTION OF A PREFERRED EMBODIMENT

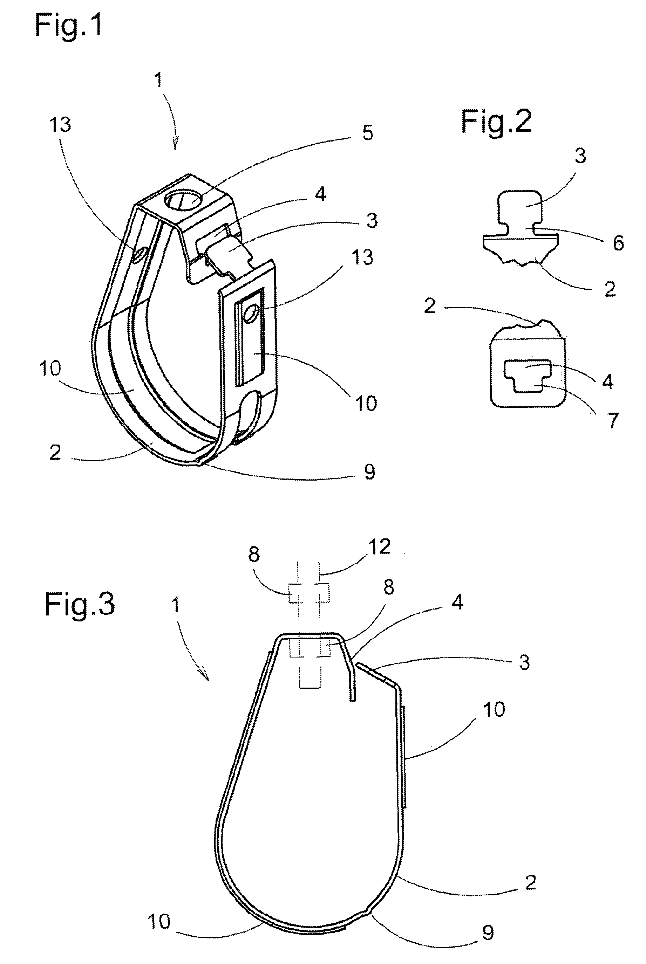

As shown in figure 1, the clamp 1 comprises a strip 2 that presents a lower circular outline. At one of its ends, the strip 2 presents a tongue 3, and at the other end, an opening 4. At the latter end there is also an orifice 5 by means of which the clamp 1 will be attached to a mean of support. The strip 2 includes, likewise, a transversal articulation 9, a pair of longitudinal ribs 10 arranged between both ends and said articulation 9, an a pair of opposite orifices 13.

The shape of the tongue 3 and of the opening 4 is shown in detail in figure 2. The tongue 3 has in its base a narrowing 6, and the opening 4 has a narrower zone 7 in its lower part. The narrowing 6 of the tongue 3 is provided to fit inside the narrow zone 7 of the opening 4, in such a way that both ends of the strip 2 will keep retained, as it will be explained below, thanks to the own weight of the pipe.

Figure 3 shows the clamp 1 fixed and open, still without any element to bear. The clamp 1 is fixed to the ceiling by way of a threaded rod 12 introduced in the orifice 5, and a pair of nuts 8 which retain one of the ends of the strip 2. The transversal articulation 9 makes the opening and closing of the clamp 1 easier.

With the clamp 1 fixed and open, the pipe 11 is introduced through the gap between both ends of the strip 2 with the aid of the articulation 9. Once done, the pipe 11 is situated at the lower part of the clamp 1. At the moment that the clamp 11 is bearing the weight of the pipe 11 but it's still not closed, the reinforcing ribs 10 avoid the strip from buckling excessively due to the weight of the pipe, preventing the pipe from falling. The articulation 9 is positioned at the lower part of the strip 2, slightly displaced to one of its sides. This position allows the clamp 1 to be opened enough to permit introducing the pipe 11, and that moreover the strip 2 can bear the weight of the pipe 11 before the clamp 1 is closed.

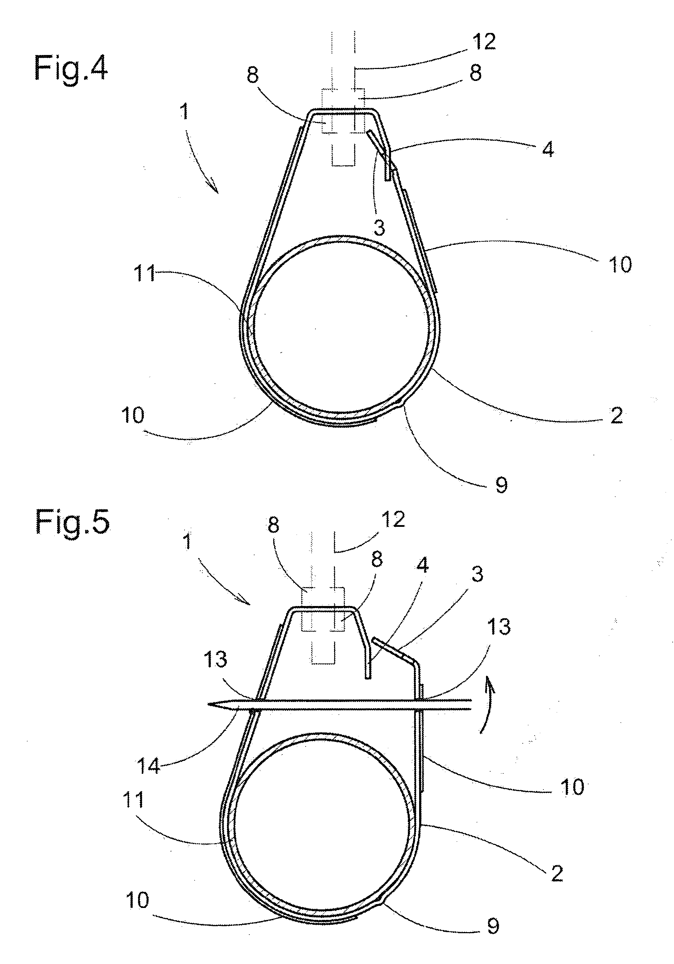

Once the pipe 11 has been already placed inside the clamp 1 (figure 4) it is closed introducing the tongue 3 of an end of the strip 2 in the opening 4 of the other end, so that the narrowing 6 of said tongue 3 is placed inside the narrower zone 7 of the opening 4. Thanks to the weight of the pipe 11, which pulls the tongue 3 downwards, the tongue is blocked inside the opening 4.

Thanks to this clamp 1, the closing is carried out quickly and without the use of any tool, which is only used to fix and to screw the clamp 1 to the rod 12. There is no need to screw the free end of the strip 2 to the rod 12, as the strip 2 is only attached to the rod 12 by one of its ends.

In case it is necessary, a screwdriver 14 or a similar tool could be used to open the clamp (figure 5) introducing it inside the two orifices 13, so that it could be levered to allow to disengage the tongue 3 from the opening 4.

All the installation process is thus carried out faster and easier.

## Claims

1. Clamp (1) for hanging pipes (11), which comprises a strip (2) that surrounds the pipe (11), means of attachment (5, 8) of the strip (2) to a support (12) and means for fitting the two ends of the strip (2), said strip (2) being attached to the means of attachment (5, 8) to a support (12) by only one end and said means for fitting the two ends of thestrip (2) comprising, at one of the ends of the strip (2), an opening (4) which includes a narrower zone (7), and at the other end of the strip (2), a tongue (3), the base of which has a narrowing (6), the fitting of both ends being carried out introducing the tongue (3) in the opening (4) so that the narrowing (6) is fitted in the narrower zone (7),
the strip (1) comprising a transversal articulation (9),
**characterized in that** the strip (2) comprises longitudinal reinforcing ribs (10) arranged between the articulation (9) and both ends.

2. Clamp (1), according to claim 1, **characterized in that** the strip (2) includes a pair of orifices for the opening of the clamp (1) by way of introducing a screwdriver the like and levering it.

## Patentansprüche

1. Klammer (1) für hängende Rohre (11), mit:
einem Band (2), welches das Rohr (11) umschließt,
Befestigungsmittel (5, 8) des Bandes (2) für eine Halterung (12) und Mittel zum Zusammenpassen der zwei Enden des Bandes (2),
wobei das Band (2) an nur einem Ende mit den Befestigungsmitteln (5, 8) an der Halterung (12) befestigt ist und die Mittel zum Zusammenpassen der beiden Enden des Bandes (2) aufweisen:
eine Öffnung (4) an einem Ende des Bandes (2) mit einem verengten Bereich (7) und an dem anderen Ende des Bandes (2) eine Zunge (3) mit einer Basis, welche eine Verjüngung (6) aufweist, wobei das Zusammenpassen der beiden Enden **dadurch** erfolgt,
dass die Zunge (3) in die Öffnung (4) eingeführt wird, sodass die Verjüngung (6) in dem verengten Bereich (7) eingepasst ist,
wobei das Band (2) einen querverlaufenden Knick (9) aufweist,
**dadurch gekennzeichnet,**
**dass** das Band (2) längslaufende Verstärkungsrippen (10) aufweist, die zwischen dem Knick (9) und den beiden Enden angeordnet sind.

2. Klammer (1) nach Anspruch 1,
**dadurch gekennzeichnet,**
**dass** das Band (2) ein Paar an Öffnungen für das Öffnen der Klammer (1) beinhaltet,
wobei die Klammer (1) **dadurch** geöffnet wird, dass ein Schraubenzieher oder Ähnliches in die Öffnungen eingeführt und angehoben wird.

## Revendications

1. Attache (1) destinée à suspendre des tuyauteries (11), qui comprend une bande (2) qui entoure la tuyauterie (11), des moyens de liaison (5, 8) de la bande (2) à un support (12) et des moyens d'assemblage des deux extrémités de la bande (2), ladite bande (2) étant liée aux moyens de liaison (5, 8) à un support (12) par une seule extrémité et ledit moyen d'assemblage des deux extrémités de la bande (2) comprenant, à l'une des extrémités de la bande (2), une ouverture (4) qui comporte une zone rétrécie (7) et, à l'autre extrémité de la bande (2), une languette (3), dont la base présente un rétrécissement (6), l'assemblage des deux extrémités étant réalisé en introduisant la languette (3) dans l'ouverture (4) de sorte que le rétrécissement (6) s'assemble dans la zone rétrécie (7), la bande (1) comprenant une articulation transversale (9),
**caractérisée, en ce que** la bande (2) comprend des nervures de renforcement longitudinales (10) formées entre l'articulation (9) et les deux extrémités.

2. Attache (1), selon la revendication 1, **caractérisée en ce que** la bande (2) comporte une paire d'orifices destinés à assurer l'ouverture de l'attache (1) en introduisant un tournevis et analogue et en le soulevant.
